# FASCICULE DE BREVET EUROPEEN

(11) **EP 2 822 903 B1**
(45) Date de publication et mention de la délivrance du brevet: **24.02.2016**
(21) Numéro de dépôt: 13712304.8
(22) Date de dépôt: 28.02.2013
(51) Int. Cl.: C03B 23/027

(54) **SUPPORT DE BOMBAGE A ARTICULATION**
GELENKIGER BIEGETRÄGER
JOINTED BENDING MOUNT

(30) Priorité: 06.03.2012 FR 1252038
(43) Date de publication de la demande: 14.01.2015
(73) Titulaire: Saint-Gobain Glass France, 92400 Courbevoie (FR)
(72) Inventeur: OLIVIER, Thierry, 60150 Thourotte (FR); MACHURA, Christophe, 60150 Chevincourt (FR)
(74) Mandataire: Colombier, Christian
(86) Numéro de dépôt international: PCT/FR2013/050417
(87) Numéro de publication internationale: WO 2013/132174

(56) Documents cités:
- EP-A1- 0 705 798
- US-A1- 2011 123 730

## Description

L'invention concerne un dispositif de bombage comprenant au moins deux cadres de bombage, notamment du type squelette, venant supporter une feuille de verre successivement et dont l'un au moins est articulé. La feuille de verre bombée peut être destinée à équiper un véhicule, notamment automobile et à être intégrée par exemple à un pare-brise ou à une lunette arrière.

La gestion de la formation des courbures de feuilles de verre à la température de bombage (généralement entre 600 et 700°C) nécessite l'utilisation de supports de bombage plus ou moins complexes et dont la géométrie varie au cours du bombage. On connait les supports comprenant deux squelettes aux courbures différentes venant prendre en charge la feuille de verre l'un après l'autre. Généralement, le premier squelette présente des courbures moins prononcées que le deuxième squelette. Le premier cadre peut être appelé « ébaucheur » (« sketcher » en anglais) et le second cadre peut être appelé « finisseur » (« finisher » en anglais). L'ébaucheur présente des courbures plus faibles que le finisseur et peut même dans certains cas être plan. La feuille de verre trouve sa forme finale sur le squelette finisseur. Afin de respecter encore davantage les courbures souhaitées et minimiser les défauts optiques, il est parfois préférable que le finisseur présente des articulations mobiles au cours du bombage. En effet, la déformation d'une feuille de verre sur un cadre non-articulé peut se traduire par un glissement des bords de la feuille sur le cadre pouvant être à l'origine d'ondulations. Ce phénomène de glissement est appelé « sliding ». L'équipement d'un cadre par une ou plusieurs articulations permet de réduire les défauts engendrés par ce phénomène.

Le EP0705798A1 enseigne un procédé pour le bombage sur cadre d'au moins une feuille de verre par gravité. Le dispositif pour le procédé comprend deux cadres. Les cadres ont la forme d'anneaux continus rigides et sont montés de façon à ce que le transfert entre le premier cadre et le deuxième cadre s'effectue par un mouvement de translation vertical.

La présente invention se rapporte à un dispositif de bombage par gravité de feuilles de verre comprenant un cadre ébaucheur généralement non-articulé et un cadre finisseur articulé. Ainsi la feuille de verre est successivement portée par l'ébaucheur puis par le finisseur articulations ouvertes puis par le finisseur articulations fermées. On a maintenant constaté qu'une marque indésirable pouvait se produire sur le verre à l'endroit des articulations lorsque celles-ci sont ouvertes et en contact avec le verre. Pour remédier à ce problème, on a trouvé qu'il convenait, dans une phase intermédiaire de bombage, de faire supporter la feuille de verre à la fois par les parties latérales articulées du finisseur non fermé et par les parties longitudinales de l'ébaucheur tant que le finisseur n'est pas fermé. Dans le cadre de la présente demande, cette phase est appelée « phase intermédiaire ». Quand le finisseur est fermé, l'ébaucheur est escamoté vers le bas par rapport au finisseur et la feuille de verre se trouve alors entièrement portée par le finisseur à l'état fermé. Il s'agit là d'un mouvement relatif des deux cadres entre eux et l'on pourrait aussi avoir le finisseur se déplaçant vers le haut. En procédant de la sorte, le verre n'est jamais en contact avec la zone des articulations du finisseur à l'état ouvert. L'adjectif « fermé » utilisé à l'endroit du finisseur signifie que ses articulations sont complètement relevées et en position finale (pour donner sa forme finale à la feuille de verre). L'adjectif « ouvert » utilisé à l'endroit du finisseur signifie que sa ou ses parties articulées ne sont pas complètement relevées et ne sont pas en position finale. L'utilisation des terme « latérale » et « longitudinale » ne présage en rien des dimension relatives des parties ainsi désignées.

Ainsi, l'invention concerne un procédé de bombage par gravité d'une feuille de verre sur un support comprenant un châssis, un premier cadre et un deuxième cadre, le deuxième cadre étant du type articulé et comprenant une partie latérale mobile passant d'une position ouverte à une position fermée par le jeu d'une articulation au cours du processus de bombage, le bombage de la feuille commençant sur le premier cadre alors que le deuxième cadre est en position ouverte, et finissant sur le deuxième cadre en position fermée, la feuille passant du premier cadre au deuxième cadre au cours du processus de bombage en conséquence du mouvement relatif vertical du premier et du deuxième cadre et du relèvement de la partie mobile du deuxième cadre, la surface de contact du premier cadre avec la feuille de verre située à la verticale de l'articulation étant au-dessus de l'articulation à l'instant de la fermeture de celle-ci. Ceci signifie que l'intersection d'une part de la verticale passant par l'articulation du deuxième cadre avec d'autre part la surface de contact du premier cadre avec la feuille de verre, se trouve au-dessus de l'articulation à l'instant de la fermeture de l'articulation.

L'invention concerne non seulement le bombage d'une feuille de verre individuelle, pouvant être ultérieurement trempée et destinée par exemple à faire office de lunette arrière de véhicule automobile, mais aussi le bombage d'au moins deux feuilles de verre (généralement deux feuilles de verre en tout) devant être ultérieurement assemblées avec une feuille intermédiaire d'un polymère tel que le polyvinylbutyral (PVB) pour réaliser un vitrage feuilleté, notamment un pare-brise de véhicule automobile. Pour ce dernier type de vitrage, on préfère réaliser le bombage des feuilles destinées au même vitrage en les superposant car ainsi on les bombe simultanément et on leur confère ainsi exactement la même forme. Pour le bombage, on introduit généralement et de façon connue une poudre intercalaire de silice ou de Kieselguhr entre les deux feuilles pour éviter leur collage. Cette poudre est évacuée après le refroidissement et l'on peut alors procéder à leur assemblage avec la feuille intercalaire de matériau polymère, généralement en PVB.

Notamment, le bombage sur le support commence alors que la surface de contact du premier cadre avec la feuille est entièrement au dessus du deuxième cadre. Généralement, à un moment du procédé de bombage, la feuille est entièrement supportée par le premier cadre sans contact avec le deuxième cadre.

Notamment, le bombage sur le support finit alors que la surface de contact du premier cadre avec la feuille est entièrement en-dessous de la surface de contact du deuxième cadre avec la feuille, la feuille étant alors entièrement supportée par le deuxième cadre sans contact avec le premier cadre.

Selon l'invention, au cours de la phase intermédiaire, et notamment à l'instant de la fermeture du cadre articulé, la feuille de verre est supportée par les bords latéraux des parties mobiles du deuxième cadre et par les bords longitudinaux du premier cadre.

De préférence, pour le mouvement relatif vertical du premier et du deuxième cadre et le passage de la feuille de verre du premier cadre au deuxième cadre, le premier cadre passe à l'intérieur du deuxième cadre. Selon cette variante, le périmètre du premier cadre est inférieur au périmètre du deuxième cadre. On peut aussi faire passer le deuxième cadre (articulé) à l'intérieur du premier cadre mais cette variante n'est pas préférée. En effet, en plaçant le premier cadre entièrement à l'intérieur du deuxième cadre vue de dessus, quand le verre commence à se bomber sous l'effet de l'action conjuguée de la chaleur et de son poids, les bords de la feuille de verre débordant à l'extérieur du premier cadre rebiquent vers le haut de sorte que ces bords s'éloignent en fait du deuxième cadre et ne risquent pas de venir le toucher. La partie de la feuille à l'intérieur du premier cadre peut se bomber sans risque de toucher le deuxième cadre puisque celui-ci se trouve à l'extérieur du premier cadre. A l'inverse, si le deuxième cadre était placé à l'intérieur du premier cadre vue de dessus, alors il y aurait un risque que le verre supporté par le premier cadre au début du bombage ne vienne toucher prématurément le deuxième cadre, sauf à prévoir une très forte différence de niveau entre les deux cadres. Une augmentation de la différence de niveau entre les deux cadres représente une augmentation de la hauteur de tout le support de bombage ce qui peut poser un problème si le four à l'intérieur duquel il doit circuler est insuffisamment haut.

Notamment, le cadre articulé peut comprendre une seule articulation, laquelle se trouve généralement en zone centrale de chacun des bords longitudinaux du deuxième cadre. Un tel cadre est alors dit à « articulation centrale ». Un tel cadre est alors constitué de deux parties mobiles portant chacune un bord latéral du cadre.

Le cadre articulé peut aussi comprendre deux articulations. Il comprend alors deux parties mobiles situées de part et d'autre d'une partie fixe. Le cadre articulé comprend alors deux bords longitudinaux, chaque bord longitudinal étant en trois parties dont une partie centrale placée entre deux parties situées chacune sur une partie mobile.

Notamment, pour le mouvement relatif vertical du premier et du deuxième cadre et le passage de la feuille de verre du premier cadre au deuxième cadre, le premier cadre peut descendre.

Pour le mouvement relatif vertical du premier et du deuxième cadre, les trois possibilités suivantes existent :
- descente du premier cadre, le deuxième cadre étant fixe ;
- montée du deuxième cadre, le premier cadre étant fixe ;
- descente du premier cadre et montée du deuxième cadre.

Lorsque l'on dit ici qu'un cadre est fixe, il s'agit d'une fixité dans une direction verticale, étant entendu que l'ensemble du support selon l'invention peut être amené à se déplacer horizontalement dans un four. En effet, le support selon l'invention peut être monté sur charriot et faire partie d'un train de charriots supports identiques faisant défiler des feuilles de verres les unes après les autres au travers d'un four. Le mouvement des différentes parties mobiles de l'un des supports dudit train (mouvement relatif vertical des cadres du support + fermeture du cadre articulé finisseur) peut être déclenché et être opéré alors que le charriot se déplace horizontalement dans le four ou bien à un endroit précis dans le four après arrêt du charriot.

Pour le mouvement relatif vertical du premier et du deuxième cadre et le passage de la feuille de verre du premier cadre au deuxième cadre, on peut prévoir de faire pivoter la partie mobile autour d'un axe pivot fixé au châssis, ledit châssis étant immobile verticalement. L'axe lui-même a une direction horizontale. Cet axe pivot ne correspond pas à celui d'une articulation mobile mais se trouve dans la longueur de la partie longitudinale d'une partie mobile. Ce mode de fonctionnement est particulièrement adapté à un cadre à articulation centrale. La fixité du châssis est essentiellement verticale puisqu'il peut être monté sur charriot et faire partie d'un train de charriots identiques faisant défiler horizontalement des feuilles de verres les unes après les autres au travers d'un four.

L'articulation d'une partie mobile comprend un axe horizontal. Cet axe peut notamment être fixe horizontalement mais mobile verticalement et pouvant se déplacer dans un trou oblong ménagé dans un guide solidaire du premier cadre ébaucheur. Le guide est fixe par rapport à l'ébaucheur. Notamment, le support selon l'invention peut comprendre un guide solidaire du premier cadre, ledit guide étant muni d'un orifice oblong dont la longueur est verticale, l'axe de l'articulation étant engagé dans ledit orifice et pouvant s'y déplacer verticalement, et pour le mouvement relatif vertical du premier et du deuxième cadre et le passage de la feuille de verre du premier cadre au deuxième cadre, le premier cadre ainsi que l'articulation descendent de sorte que la partie mobile pivote autour de l'axe pivot fixé au châssis, l'axe de l'articulation se trouvant en bas du trou oblong, puis, lorsque l'articulation est fermée, le premier cadre continu de descendre jusqu'à ce que l'axe de l'articulation se trouve en haut du trou oblong.

Les cadres dont il est question dans la présente demande présentent une surface supérieure plane destinée à supporter la feuille de verre. Généralement, cette surface supérieure présente une largeur comprise entre 1 et 100 mm. Les cadres peuvent notamment être du type squelette. Un squelette est une fine bande de métal présentant une de ses tranches vers le haut pour supporter le verre, l'épaisseur de ladite tranche allant généralement de 1 à 5 mm et plus généralement de 2 à 3,5 mm. En fin de bombage, le cadre finisseur est en contact continu par sa surface supérieure plane avec le verre. Les cadres de bombage, notamment du type squelette, sont de préférence revêtus d'un matériau fibreux du type feutre ou toile de fibres réfractaires métalliques et/ou céramique, comme cela est bien connu de l'homme du métier. Ce matériau est généralement appelé « intercalaire ». Ces feutres réduisent le marquage du verre. Ce matériau fibreux intercalaire présente généralement une épaisseur allant de 0,3 à 1 mm. Pour simplifier, on considère que l'intercalaire fait partie du cadre au sens de l'invention, le terme cadre prenant ainsi une signification assez générale dans la mesure où il s'agit d'un support de type annulaire pour la périphérie de la feuille de verre. Ainsi, une « surface de contact d'un cadre » avec la feuille de verre est la surface de l'intercalaire si le cadre en est revêtu. Les deux cadres en mouvement vertical relatif l'un par rapport à l'autre sont suffisamment écartés l'un de l'autre pour ne pas se frotter lors dudit mouvement. Ainsi, s'ils doivent être équipés d'un intercalaire, on prévoit généralement une distance d'au moins 3 mm et même au moins 4 mm entre les deux cadres avant montage de l'intercalaire.

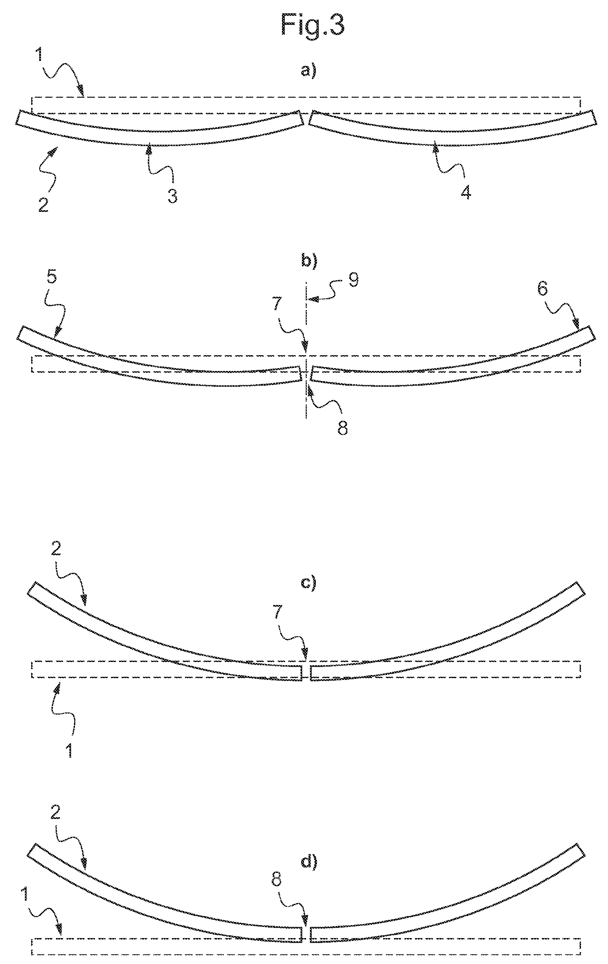

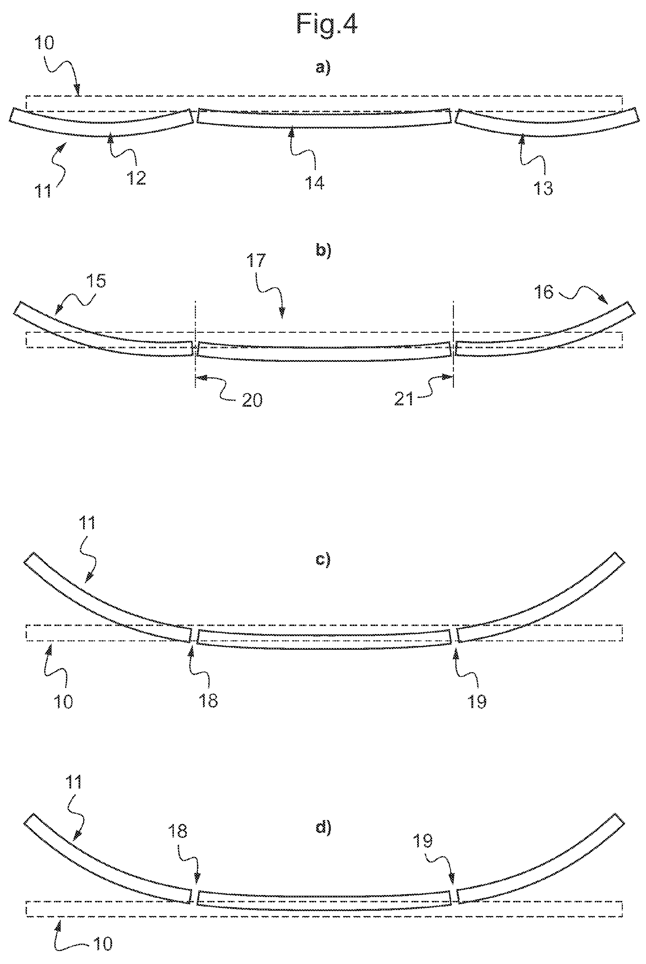

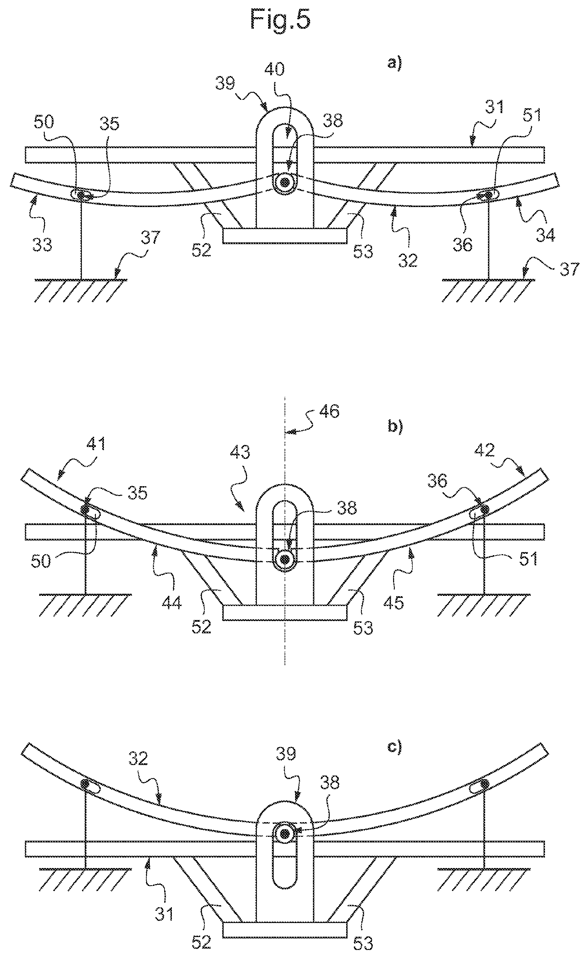

De préférence, les mouvements des différentes parties du support selon l'invention sont réalisés de façon contrôlée, c'est-à-dire à une vitesse maitrisée grâce à laquelle les feuilles de verre sont bien stables sur les cadres successifs et, par exemple, ne viennent pas à sursauter lors du déclenchement d'un mécanisme. Ainsi, on peut notamment utiliser le mécanisme décrit dans le WO2007/077371 et notamment ses figures 3 et 4 pour faire descendre le cadre ébaucheur par rapport au cadre finisseur. Il suffit donc ensuite de relier le mécanisme de remontée des parties mobiles du finisseur à la baisse de l'ébaucheur pour que l'intégralité des mouvements des différentes parties du support selon l'invention (mouvement relatif vertical des deux cadres + remontée des parties mobiles du finisseur) soit contrôlée. La figure 5 de la présente demande montre comment il est possible de relier le mécanisme de remontée des parties mobiles du finisseur à la baisse de l'ébaucheur.

Le déplacement des différents éléments mobiles du support représente un changement de forme de la surface de contact du support par rapport au verre supporté. Ce changement de forme peut être commandé par un système de commande comprenant un système générateur de mouvement et un organe de transmission (pouvant traverser une paroi du four) pour transmettre ledit mouvement au support et contrôler le changement de forme. La vitesse du changement de forme est réglée par le réglage de la vitesse du mouvement généré par le système générateur de mouvement pouvant être placé à l'extérieur du four. Le placement à l'extérieur du four du système générateur de mouvement est avantageux s'il comprend des organes du type électromécanique ne résistant pas aux températures de bombage. Ce mouvement est transmis au support par un organe de transmission. Si le système générateur de mouvement est placé à l'extérieur du four, l'organe de transmission traverse au moins une des parois du four (ce qui englobe les parois latérales mais aussi la sole et la voûte). Les figures ci-dessous décrites illustrent l'invention appliquée à des formes simples de feuilles de verre (feuilles rectangulaires avec des rayons de courbures assez constants), mais il est bien entendu que l'invention est applicable à des formes bien plus complexes tant au niveau du contour des feuilles de verre qu'à leurs rayons de courbure).

L'invention concerne également le support de bombage décrit précédemment pour l'exécution du procédé de bombage. Ainsi l'invention concerne également un support de bombage par gravité d'une feuille de verre, comprenant un premier cadre et un deuxième cadre, le deuxième cadre étant du type articulé et comprenant une partie latérale mobile pouvant passer d'une position ouverte à une position fermée par le jeu d'une articulation, le premier cadre et le deuxième cadre étant mobiles l'un par rapport à l'autre par un mouvement vertical relatif, le mouvement vertical relatif des cadres étant relié au mouvement de fermeture ou d'ouverture de l'articulation, la surface de contact du premier cadre avec la feuille de verre et située à la verticale de l'articulation, étant au-dessus de l'articulation au moment de la fermeture de celle-ci. L'abaissement du premier cadre (ébaucheur) par rapport au deuxième cadre est accompagné de la fermeture de l'articulation. Au moment ou l'articulation se ferme, la surface de contact du premier cadre avec la feuille de verre et située à la verticale de l'articulation est au-dessus de l'articulation. Ensuite, le premier cadre peut poursuivre sa descente relativement au deuxième cadre et laisser reposer la feuille de verre entièrement sur le deuxième cadre, articulation fermée.

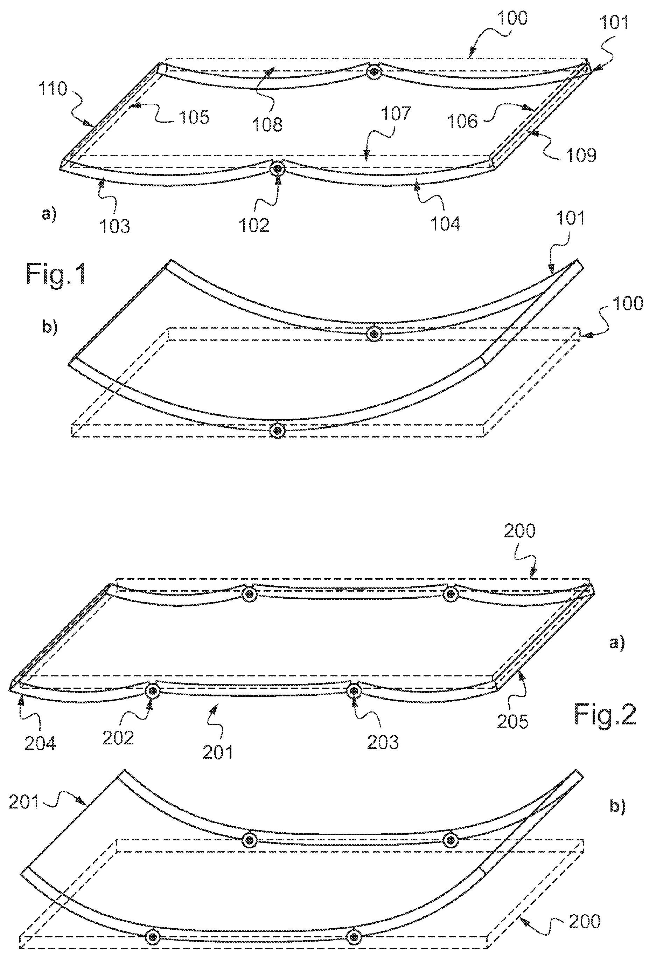

Les figures 1 et 2 montrent le type de doubles cadres de bombage (ici du type squelette) auxquels s'adresse l'invention. La figure 1 montre un support comprenant deux cadres, un ébaucheur quasi-plan 100 et un finisseur 101 articulé à articulation centrale 102. Le finisseur comprend deux parties mobiles 103 et 104 pouvant pivoter autour d'une articulation 102 (on parle d' « une articulation », mais bien entendu, il s'agit d'une paire d'articulations, une par bord longitudinal). L'ébaucheur comprend deux bords latéraux 105 et 106 et deux bords longitudinaux 107 et 108. Les parties mobiles du finisseur comprennent chacune un bord latéral 109 et 110 du finisseur. Le finisseur comprend également deux bords longitudinaux, chaque bord longitudinal étant partagé en deux parties comprises dans chaque partie mobile. En a), la feuille de verre est supportée uniquement par l'ébaucheur 100, le finisseur étant ouvert (parties mobiles 103 et 104 non remontées) et entièrement sous le niveau de la surface de contact de l'ébaucheur avec la feuille de verre. La feuille de verre commence son bombage sur l'ébaucheur. Vue de dessus, l'ébaucheur est entièrement inscrit à l'intérieur du finisseur. Au cours du bombage, l'ébaucheur descend et passe entièrement à l'intérieur du finisseur qui se referme. La feuille de verre passe alors de l'ébaucheur au finisseur. En b), en fin de bombage, le finisseur 101 est refermé (parties mobiles 103 et 104 remontées) et sa surface de contact avec le verre est entièrement au-dessus de la surface de contact du verre avec l'ébaucheur. Ainsi, le verre n'a plus de contact avec l'ébaucheur 100.

La figure 2 représente un support comprenant deux cadres, un ébaucheur quasi-plan 200 et un finisseur 201 à deux articulations 202 et 203 (il s'agit bien entendu de deux paires d'articulations, chaque bord longitudinal comprenant deux articulations par bord longitudinal). Les bords longitudinaux du finisseur comprennent des parties centrales entre les deux parties mobiles. En a), la feuille de verre est supportée uniquement par l'ébaucheur 200, le finisseur étant ouvert (parties mobiles 204 et 205 non remontées) et entièrement sous le niveau de la surface de contact de l'ébaucheur avec la feuille de verre. La feuille de verre commence son bombage sur l'ébaucheur. Vue de dessus, l'ébaucheur est entièrement inscrit à l'intérieur du finisseur. Au cours du bombage, l'ébaucheur descend et passe entièrement à l'intérieur du finisseur qui se referme. La feuille de verre passe alors de l'ébaucheur au finisseur. En b), en fin de bombage, le finisseur 201 est refermé (parties mobiles 204 et 205 remontées) et sa surface de contact avec le verre est entièrement au-dessus de la surface de contact du verre avec l'ébaucheur. Ainsi, le verre n'a plus de contact avec l'ébaucheur 200.

La figure 3 représente un support de bombage comprenant deux cadres du type squelette, un ébaucheur plan 1 et un finisseur 2 articulé à articulation centrale comprenant deux parties mobiles articulées 3 et 4. Les positions relatives des deux squelettes ainsi que celle des parties articulées sont vues à différente stades du bombage par gravité de a) à d). Les deux squelettes sont du type annulaire et supportent la périphérie d'au moins une feuille de verre. L'ébaucheur se trouve à l'intérieur du finisseur vu de dessus. En a), la feuille de verre (non représentée) repose uniquement sur l'ébaucheur 1. Au cours du bombage sur l'ébaucheur, la feuille de verre ne risque pas de toucher le finisseur 2. En effet, elle se creuse en sa zone interne de sorte que ses bords remontent et s'éloignent même du finisseur. En b), le finisseur est en cours de fermeture et ses deux parties articulées 3 et 4 sont un peu remontées. A ce stade intermédiaire, la feuille repose à la fois sur les extrémités 5 et 6 du finisseur, ce qui inclus les bords latéraux du finisseur, et sur les zones centrales 7 des bords longitudinaux de l'ébaucheur. Le verre est donc protégé de tout contact avec l'articulation à la verticale 9 de celle-ci. En c), l'articulation 8 du finisseur 2 vient de se refermer complètement et l'on voit encore l'ébaucheur juste au-dessus de l'articulation du finisseur. La feuille de verre est donc à ce stade supportée principalement par le finisseur et encore un peu par l'ébaucheur dans ses zones centrales 7 des bords longitudinaux et en tout cas à la verticale de l'articulation. En d), le finisseur est dans le même état qu'en c), c'est-à-dire complètement refermé, mais l'ébaucheur 1 est escamoté vers le bas, de sorte que la feuille de verre est entièrement supportée par le finisseur 2. Le processus de a) à d) montre comment il est possible que la feuille de verre ne vienne jamais au contact de l'articulation 8 du finisseur si celui-ci n'est pas complètement fermé. De a) à d) il y a eu un mouvement continu relatif vertical de l'ébaucheur et du finisseur faisant passer l'ébaucheur au travers du finisseur, accompagné de la fermeture du finisseur.

La figure 4 représente un support de bombage comprenant deux squelettes, un ébaucheur plan 10 et un finisseur 11 articulé comprenant deux parties latérales mobiles 12 et 13 de part et d'autre de parties centrales de bords longitudinaux du finisseur. Les positions relatives des deux squelettes ainsi que celle des parties articulées sont vues à différentes stades du bombage par gravité de a) à d). Les deux squelettes sont du type annulaire et supportent la périphérie d'au moins une feuille de verre. L'ébaucheur se trouve à l'intérieur du finisseur vue de dessus. En a), la feuille de verre repose uniquement sur l'ébaucheur 1. Au cours du bombage sur l'ébaucheur, la feuille de verre ne risque pas de toucher le finisseur 2. En effet, elle se creuse en sa zone interne de sorte que ses bords remontent et le cas échéant s'éloignent même du finisseur. En b), le finisseur est en cours de fermeture et ses deux parties mobiles 12 et 13 sont un peu remontées. A ce stade intermédiaire, la feuille repose à la fois sur les extrémités 15 et 16 des parties mobiles du finisseur, ce qui inclus les bords latéraux du finisseur, et sur les zones centrales 17 des bords longitudinaux de l'ébaucheur 10. Le verre est donc protégé de tout contact avec les articulations aux verticales 20 et 21 de celles-ci. En c), les articulations 18 et 19 du finisseur 11 viennent de se refermer complètement et l'on voit encore l'ébaucheur juste au-dessus desdites articulations du finisseur. La feuille de verre est donc à ce stade supportée à la fois par le finisseur 11 et encore par l'ébaucheur dans ses zones centrales 17 des bords longitudinaux. En d), le finisseur 11 est dans le même état qu'en c), c'est-à-dire articulations complètement refermées, mais l'ébaucheur 10 est escamoté vers le bas et se trouve en dessous des articulations 18 et 19 de sorte que la feuille de verre est entièrement supportée par le finisseur 11. Le processus de a) à d) montre comment il est possible que la feuille de verre ne vienne jamais au contact des articulations 18 et 19 du finisseur si celui-ci n'est pas complètement fermé. De a) à d) il y a eu un mouvement continu relatif vertical de l'ébaucheur et du finisseur faisant passer l'ébaucheur au travers du finisseur, accompagné de la fermeture du finisseur.

La figure 5 représente un support de bombage comprenant deux cadres du type squelette, un ébaucheur plan 31 et un finisseur 32 articulé à articulation centrale comprenant deux parties mobiles articulées 33 et 34. Les positions relatives des deux squelettes ainsi que celle des parties articulées sont vues à différentes stades du bombage par gravité de a) à c). Chaque partie mobile comprend dans sa longueur un axe pivot 35 et 36 dont la position est fixe par rapport au châssis 37 du dispositif (la fixité verticale du châssis est symbolisée par la représentation de la « terre »). Ces deux axes pivot 35 et 36 ne bougent donc pas en hauteur. Les parties mobiles 33 et 34 peuvent se déplacer légèrement par rapport à ces axes pivot 35 et 36 grâce aux trous oblongs 50 et 51 ménagés dans ces parties mobiles autour de ces axes pivot. Les deux parties mobiles 33 et 34 sont par ailleurs reliées entre elles par un autre axe pivot 38 en position centrale. Cet axe pivot 38 est déplaçable verticalement dans un guide 39 comprenant un orifice oblong 40 dont la longueur est verticale. L'axe 38 peut se déplacer verticalement à l'intérieur du trou oblong 40. L'ébaucheur 31 et le guide 39 sont solidaires entre eux de façon fixe grâce aux éléments de liaison 52 et 53. De a) à c), le principe du remplacement de l'ébaucheur par le finisseur est celui déjà expliqué par la figure 3. En a), seul l'ébaucheur porte la feuille de verre (non représentée) et un premier bombage a lieu sur lui. Ensuite, l'ébaucheur commence à descendre, ce qui permet à l'axe 38 de descendre également sous l'effet du poids des parties mobiles proches de l'axe 38. Cette baisse de l'axe 38 fait remonter les extrémités des parties mobiles par pivotement autour des axes pivot 35 et 36. Les extrémités des parties mobiles viennent alors au-dessus de l'ébaucheur et prennent en charge partiellement la feuille de verre. A ce stade (stade b) de la figure 5), la feuille de verre repose sur les extrémités 41 et 42 des parties mobiles, ce qui inclut les bords latéraux des parties mobiles, et sur la zone centrale 43 des parties longitudinales de l'ébaucheur. Le finisseur est fermé, les extrémités de ses parties mobiles étant totalement remontées. Des butées (non représentées) solidaires du châssis marquent la fin de la remontée des extrémités des parties mobiles, c'est-à-dire aussi la fin de la descente des zones 44 et 45 des parties mobiles situées entre l'axe pivot central 38 et les axes pivots 35 et 36. A ce stade, l'ébaucheur reste au-dessus de l'articulation centrale 38 fermée, protégeant de ce fait le verre à la verticale 46 de l'articulation. L'ébaucheur peut continuer de descendre entraînant le guide 39. L'axe pivot 38 de l'articulation reste fixe par rapport au châssis. C'est le guide 39 qui continue de descendre, de sorte que l'axe pivot central 38 se retrouve en haut du trou oblong en fin de processus représenté en c). Le finisseur 32 est alors entièrement au-dessus de l'ébaucheur 31.

## Revendications

1. Procédé de bombage par gravité d'une feuille de verre sur un support comprenant un châssis, un premier cadre (100) et un deuxième cadre (101), le deuxième cadre étant du type articulé et comprenant une partie latérale mobile (103,104) passant d'une position ouverte à une position fermée par le jeu d'une articulation (102) au cours du processus de bombage, le bombage de la feuille commençant sur le premier cadre alors que le deuxième cadre est en position ouverte, et finissant sur le deuxième cadre en position fermée, la feuille passant du premier cadre au deuxième cadre au cours du processus de bombage en conséquence du mouvement relatif vertical du premier et du deuxième cadre et du relèvement de la partie mobile du deuxième cadre, **caractérisé en ce que** la surface de contact du premier cadre avec la feuille de verre située à la verticale de l'articulation est au-dessus de l'articulation à l'instant de la fermeture de celle-ci.

2. Procédé selon la revendication précédente, **caractérisé en ce que** le bombage sur le support commence alors que la surface de contact du premier cadre avec la feuille est entièrement au dessus du deuxième cadre.

3. Procédé selon l'une des revendications précédentes, **caractérisé en ce que** le bombage sur le support finit alors que la surface de contact du premier cadre avec la feuille est entièrement en-dessous de la surface de contact du deuxième cadre avec la feuille, la feuille étant alors entièrement supportée par le deuxième cadre et sans contact avec le premier cadre.

4. Procédé selon l'une des revendications précédentes, **caractérisé en ce qu'**à l'instant de la fermeture du cadre articulé la feuille de verre est supportée par les bords latéraux des parties mobiles (109,110) du deuxième cadre et par les bords longitudinaux (107,108) du premier cadre.

5. Procédé selon l'une des revendications précédentes, **caractérisé en ce que** pour le mouvement relatif vertical du premier et du deuxième cadre et le passage de la feuille de verre du premier cadre au deuxième cadre, le premier cadre passe à l'intérieur du deuxième cadre.

6. Procédé selon l'une des revendications précédentes, **caractérisé en ce que** pour le mouvement relatif vertical du premier et du deuxième cadre et le passage de la feuille de verre du premier cadre au deuxième cadre, le premier cadre descend.

7. Procédé selon l'une des revendications précédentes, **caractérisé en ce que** pour le mouvement relatif vertical du premier et du deuxième cadre et le passage de la feuille de verre du premier cadre au deuxième cadre, la partie mobile pivote autour d'un axe pivot (35,36) fixé au châssis (37), ledit châssis étant immobile verticalement.

8. Procédé selon la revendication précédente **caractérisé en ce que** le support comprend un guide (39) solidaire du premier cadre, ledit guide étant muni d'un orifice oblong (40) dont la longueur est verticale, un axe de l'articulation (38) étant engagé dans ledit orifice et pouvant s'y déplacer verticalement, et **en ce que** pour le mouvement relatif vertical du premier et du deuxième cadre et le passage de la feuille de verre du premier cadre (31) au deuxième cadre (32), le premier cadre (31) ainsi que l'articulation (38) descendent de sorte que la partie mobile pivote autour de l'axe pivot (35,36) fixé au châssis (37), l'axe de l'articulation se trouvant en bas du trou oblong (40), puis, lorsque l'articulation est fermée, le premier cadre (31) continue de descendre jusqu'à ce que l'axe de l'articulation (38) se trouve en haut du trou oblong (40).

9. Procédé selon l'une des revendications précédentes, **caractérisé en ce que** le cadre articulé comprend une articulation centrale (102) ou deux articulations (202,203) dans chacun de ses bords longitudinaux.

10. Procédé selon l'une des revendications précédentes, **caractérisé en ce que** plusieurs feuilles de verre superposées sont bombées simultanément.

11. Support de bombage par gravité d'une feuille de verre, comprenant un premier cadre (31) et un deuxième cadre (32), le deuxième cadre étant du type articulé et comprenant une partie latérale mobile (33,34) pouvant passer d'une position ouverte à une position fermée par le jeu d'une articulation (38), le premier cadre et le deuxième cadre étant mobiles l'un par rapport à l'autre par un mouvement vertical relatif, le mouvement vertical relatif des cadres étant relié au mouvement de fermeture ou d'ouverture de l'articulation, la surface de contact du premier cadre avec la feuille de verre et située à la verticale (46) de l'articulation, étant au-dessus de l'articulation au moment de la fermeture de celle-ci.

12. Support selon la revendication précédente, **caractérisé en ce qu'**à l'instant de la fermeture du cadre articulé, la feuille de verre est supportée par les bords latéraux des parties mobiles du deuxième cadre et par les bords longitudinaux du premier cadre.

13. Support selon l'une des revendications de support précédentes, **caractérisé en ce que** pour le mouvement vertical relatif du premier cadre et du deuxième cadre, le premier cadre et le deuxième cadre passent l'un à l'intérieur de l'autre.

14. Support selon l'une des revendications de support précédentes, **caractérisé en ce que** pour le mouvement relatif vertical du premier et du deuxième cadre et le passage de la feuille de verre du premier cadre au deuxième cadre, la partie mobile pivote autour d'un axe pivot (35, 36) fixé à un châssis (37) immobile verticalement.

15. Support selon la revendication précédente **caractérisé en ce que** le support comprend un guide (39) solidaire du premier cadre, ledit guide étant muni d'un orifice oblong (40) dont la longueur est verticale, un axe de l'articulation (38) étant engagé dans ledit orifice et pouvant s'y déplacer verticalement, et **en ce que** pour le mouvement relatif vertical du premier et du deuxième cadre et le passage de la feuille de verre du premier cadre (31) au deuxième cadre (32), le premier cadre (31) ainsi que l'articulation (38) descendent de sorte que la partie mobile pivote autour de l'axe pivot (35,36) fixé au châssis (37), l'axe de l'articulation se trouvant en bas du trou oblong (40), puis, lorsque l'articulation est fermée, le premier cadre (31) continue de descendre jusqu'à ce que l'axe de l'articulation (38) se trouve en haut du trou oblong (40).

16. Support selon l'une des revendications de support précédentes, **caractérisé en ce que** le cadre articulé comprend une articulation centrale (102) ou deux articulations (202,203) dans chacun de ses bords longitudinaux.

## Patentansprüche

1. Verfahren zum Biegen durch Schwerkraft einer Glasscheibe auf einem Träger, der ein Gestell, einen ersten Rahmen (100) und einen zweiten Rahmen (101) umfasst, wobei der zweite Rahmen des angelenkten Typs ist und ein bewegliches Seitenteil (103, 104) umfasst, das im Laufe des Biegeprozesses durch das Spiel eines Gelenks (102) von einer geöffneten Position in eine geschlossene Position übergeht, wobei das Biegen der Scheibe auf dem ersten Rahmen beginnt, während der zweite Rahmen in geöffneter Position ist, und auf dem zweiten Rahmen in geschlossener Position endet, wobei die Scheibe im Laufe des Biegeprozesses in Folge der relativen vertikalen Bewegung des ersten und des zweiten Rahmens und des Anhebens des beweglichen Teils des zweiten Rahmens vom ersten Rahmen zum zweiten Rahmen übergeht, **dadurch gekennzeichnet, dass** die Kontaktfläche des ersten Rahmens mit der Glasscheibe, die in der Vertikalen des Gelenks liegt, zum Zeitpunkt des Schließens des Gelenks über dem Gelenk ist.

2. Verfahren nach dem vorhergehenden Anspruch, **dadurch gekennzeichnet, dass** das Biegen auf dem Träger beginnt, während die Kontaktfläche des ersten Rahmens mit der Scheibe vollständig über dem zweiten Rahmen ist.

3. Verfahren nach einem der vorhergehenden Ansprüche, **dadurch gekennzeichnet, dass** das Biegen auf dem Träger endet, während die Kontaktfläche des ersten Rahmens mit der Scheibe vollständig unter der Kontaktfläche des zweiten Rahmens mit der Scheibe ist, wobei die Scheibe dann vollständig durch den zweiten Rahmen gestützt wird und keinen Kontakt mit dem ersten Rahmen hat.

4. Verfahren nach einem der vorhergehenden Ansprüche, **dadurch gekennzeichnet, dass** zum Zeitpunkt des Schließens des angelenkten Rahmens die Glasscheibe durch die Seitenränder der beweglichen Teile (109, 110) des zweiten Rahmens und durch die Längsränder (107, 108) des ersten Rahmens gestützt wird.

5. Verfahren nach einem der vorhergehenden Ansprüche, **dadurch gekennzeichnet, dass** bei der relativen vertikalen Bewegung des ersten und des zweiten Rahmens und beim Übergang der Glasscheibe vom ersten Rahmen zum zweiten Rahmen der erste Rahmen im Inneren des zweiten Rahmens verläuft.

6. Verfahren nach einem der vorhergehenden Ansprüche, **dadurch gekennzeichnet, dass** bei der relativen vertikalen Bewegung des ersten und des zweiten Rahmens und beim Übergang der Glasscheibe vom ersten Rahmen zum zweiten Rahmen sich der erste Rahmen abwärts bewegt.

7. Verfahren nach einem der vorhergehenden Ansprüche, **dadurch gekennzeichnet, dass** bei der relativen vertikalen Bewegung des ersten und des zweiten Rahmens und beim Übergang der Glasscheibe vom ersten Rahmen zum zweiten Rahmen sich das bewegliche Teil um einen Drehbolzen (35, 36) dreht, der an dem Gestell (37) befestigt ist, wobei das Gestell in vertikaler Richtung unbeweglich ist.

8. Verfahren nach dem vorhergehenden Anspruch, **dadurch gekennzeichnet, dass** der Träger eine Führung (39) aufweist, die fest mit dem ersten Rahmen verbunden ist, wobei die Führung mit einem Langloch (40) versehen ist, dessen Länge vertikal ist, wobei ein Gelenkbolzen (38) in die Öffnung eingesetzt ist und sich darin in vertikaler Richtung bewegen kann, und dass bei der relativen vertikalen Bewegung des ersten und des zweiten Rahmens und beim Übergang der Glasscheibe vom ersten Rahmen (31) zum zweiten Rahmen (32) der erste Rahmen (31) sowie das Gelenk (38) sich abwärts bewegen, so dass das bewegliche Teil sich um den Drehbolzen (35, 36) dreht, der an dem Gestell (37) befestigt ist, wobei der Gelenkbolzen sich im unteren Teil des Langlochs (40) befindet, und dann, wenn das Gelenk geschlossen ist, der erste Rahmen (31) sich weiter abwärts bewegt, bis der Gelenkbolzen (38) sich im oberen Teil des Langlochs (40) befindet.

9. Verfahren nach einem der vorhergehenden Ansprüche, **dadurch gekennzeichnet, dass** der angelenkte Rahmen ein mittleres Gelenk (102) oder zwei Gelenke (202, 203) in jedem seiner Längsränder umfasst.

10. Verfahren nach einem der vorhergehenden Ansprüche, **dadurch gekennzeichnet, dass** mehrere übereinander gelegte Glasscheiben gleichzeitig gebogen werden.

11. Träger zum Biegen durch Schwerkraft einer Glasscheibe, der einen ersten Rahmen (31) und einen zweiten Rahmen (32) umfasst, wobei der zweite Rahmen des angelenkten Typs ist und ein bewegliches Seitenteil (33, 34) umfasst, das durch das Spiel eines Gelenks (38) von einer geöffneten Position in eine geschlossene Position übergehen kann, wobei der erste Rahmen und der zweite Rahmen durch eine relative vertikale Bewegung relativ zueinander beweglich sind, wobei die relative vertikale Bewegung der Rahmen mit der Schließ- oder Öffnungsbewegung des Gelenks verbunden ist, wobei die Kontaktfläche des ersten Rahmens mit der Glasscheibe, die in der Vertikalen (46) des Gelenks liegt, zum Zeitpunkt des Schließens von diesem über dem Gelenk ist.

12. Träger nach dem vorhergehenden Anspruch, **dadurch gekennzeichnet, dass** zum Zeitpunkt des Schließens des angelenkten Rahmens die Glasscheibe durch die Seitenränder der beweglichen Teile des zweiten Rahmens und durch die Längsränder des ersten Rahmens gestützt wird.

13. Träger nach einem der vorhergehenden Träger-Ansprüche, **dadurch gekennzeichnet, dass** bei der relativen vertikalen Bewegung des ersten Rahmens und des zweiten Rahmens der erste Rahmen und zweite Rahmen im Inneren des jeweils anderen verlaufen.

14. Träger nach einem der vorhergehenden Träger Ansprüche, **dadurch gekennzeichnet, dass** bei der relativen vertikalen Bewegung des ersten und des zweiten Rahmens und beim Übergang der Glasscheibe vom ersten Rahmen zum zweiten Rahmen das bewegliche Teil sich um einen Drehbolzen (35, 36) dreht, der an einem Gestell (37) befestigt ist, das in vertikaler Richtung unbeweglich ist.

15. Träger nach dem vorhergehenden Anspruch, **dadurch gekennzeichnet, dass** der Träger eine Führung (39) aufweist, die fest mit dem ersten Rahmen verbunden ist, wobei die Führung mit einem Langloch (40) versehen ist, dessen Länge vertikal ist, wobei ein Gelenkbolzen (38) in die Öffnung eingesetzt ist und sich darin in vertikaler Richtung bewegen kann, und dass bei der relativen vertikalen Bewegung des ersten und des zweiten Rahmens und beim Übergang der Glasscheibe vom ersten Rahmen (31) zum zweiten Rahmen(32) sich der erste Rahmen (31) sowie das Gelenk (38) abwärts bewegen, so dass sich das bewegliche Teil um den Drehbolzen (35, 36) dreht, der an dem Gestell (37) befestigt ist, wobei der Gelenkbolzen sich im unteren Teil des Langlochs (40) befindet, und dann, wenn das Gelenk geschlossen ist, der erste Rahmen (31) sich weiter abwärts bewegt, bis der Gelenkbolzen (38) sich im oberen Teil des Langlochs (40) befindet.

16. Träger nach einem der vorhergehenden Ansprüche, **dadurch gekennzeichnet, dass** der angelenkte Rahmen ein mittleres Gelenk (102) oder zwei Gelenke (202, 203) in jedem seiner Längsränder umfasst.

## Claims

1. A process for the gravity bending of a glass sheet on a support comprising a chassis, a first frame (100) and a second frame (101), the second frame being of articulated type and comprising a mobile lateral part (103,104) that passes from an open position to a closed position by means of an articulation (102) in the course of the bending procedure, the bending of the sheet beginning on the first frame while the second frame is in the open position, and finishing on the second frame in the closed position, the sheet passing from the first frame to the second frame during the bending procedure as a result of the relative vertical movement of the first and second frame and of the raising of the mobile part of the second frame, **characterized in that** the contact area of the first frame with the glass sheet located in a vertical line with the articulation is above the articulation at the instant the latter is closed.

2. The process as claimed in the preceding claim, **characterized in that** the bending on the support begins when the contact area of the first frame with the sheet is entirely above the second frame.

3. The process as claimed in either of the preceding claims, **characterized in that** the bending on the support finishes when the contact area of the first frame with the sheet is entirely below the contact area of the second frame with the sheet, the sheet then being entirely supported by the second frame and having no contact with the first frame.

4. The process as claimed in one of the preceding claims, **characterized in that** at the instant when the articulated frame is closed, the glass sheet is supported by the lateral edges of the mobile parts (109,110) of the second frame and by the longitudinal edges (107,108) of the first frame.

5. The process as claimed in one of the preceding claims, **characterized in that** for the relative vertical movement of the first frame and of the second frame and the transfer of the glass sheet from the first frame to the second frame, the first frame passes inside the second frame.

6. The process as claimed in one of the preceding claims, **characterized in that** for the relative vertical movement of the first frame and of the second frame and the transfer of the glass sheet from the first frame to the second frame, the first frame descends.

7. The process as claimed in one of the preceding claims, **characterized in that** for the relative vertical movement of the first frame and of the second frame and the transfer of the glass sheet from the first frame to the second frame, the mobile part pivots about a pivot axis (35,36) fixed to the chassis (37), said chassis being vertically immobile.

8. The process as claimed in the preceding claim, **characterized in that** the support comprises a guide (39) firmly attached to the first frame, said guide being equipped with an oblong orifice (40), the length of which is vertical, an axis of the articulation (38) being engaged in said orifice and being able to move therein vertically, and **in that** for the relative vertical movement of the first frame and of the second frame and the transfer of the glass sheet from the first frame (31) to the second frame (32), the first frame (31) and also the articulation (38) descend so that the mobile part pivots about the pivot axis (35,36) fixed to the chassis (37), the axis of the articulation being at the bottom of the oblong (40) hole, then, when the articulation is closed, the first frame (31) continues to descend until the axis of the articulation (38) is found at the top of the oblong hole (40).

9. The process as claimed in one of the preceding claims, **characterized in that** the articulated frame comprises a central articulation (102) or two articulations (202,203) in each of its longitudinal edges.

10. The process as claimed in one of the preceding claims, **characterized in that** several superposed glass sheets are bent simultaneously.

11. A support for the gravity bending of a glass sheet, comprising a first frame (31) and a second frame (32), the second frame being of the articulated type and comprising a mobile lateral part (33,34) that can pass from an open position to a closed position by means of an articulation (38), the first frame and the second frame being mobile with respect to one another via a relative vertical movement, the relative vertical movement of the frames being connected to the closing or opening movement of the articulation, the contact area of the first frame with the glass sheet and located in a vertical line (46) with the articulation being above the articulation at the moment the latter is closed.

12. The support as claimed in preceeding claim, **characterized in that** at the instant when the articulated frame is closed, the glass sheet is supported by the lateral edges of the mobile parts of the second frame and by the longitudinal edges of the first frame.

13. The support as claimed in one of the preceding claims of support, **characterized in that** for the relative vertical movement of the first frame and of the second frame, one of both frames passes inside the other frame.

14. The support as claimed in one of the preceding claims of support, **characterized in that** for the relative vertical movement of the first frame and of the second frame and the transfer of the glass sheet from the first frame to the second frame, the mobile part pivots about a pivot axis (35,36) fixed to the chassis (37), said chassis being vertically immobile.

15. The support as claimed in preceeding claim, **characterized in that** the support comprises a guide (39) firmly attached to the first frame, said guide being equipped with an oblong orifice (40), the length of which is vertical, an axis of the articulation (38) being engaged in said orifice and being able to move therein vertically, and **in that** for the relative vertical movement of the first frame and of the second frame and the transfer of the glass sheet from the first frame (31) to the second frame (32), the first frame (31) and also the articulation (38) descend so that the mobile part pivots about the pivot axis (35,36) fixed to the chassis (37), the axis of the articulation being at the bottom of the oblong hole (40), then, when the articulation is closed, the first frame (31) continues to descend until the axis of the articulation (38) is found at the top of the oblong hole (40).

16. The support as claimed in one of the preceding claims of support, **characterized in that** the articulated frame comprises a central articulation (102) or two articulations (202,203) in each of its longitudinal edges.
